# EUROPÄISCHE PATENTSCHRIFT

(11) **EP 1 793 214 B1**
(45) Veröffentlichungstag und Bekanntmachung des Hinweises auf die Patenterteilung: **14.06.2017**
(21) Anmeldenummer: 06023138.8
(22) Anmeldetag: 07.11.2006
(51) Int. Cl.: G01K 7/38, G01K 13/08

(54) **Anordnung zur berührungslosen Temperaturmessung an Rotoren**
System for contactless temperature measurement on rotors
Agencement destiné à la mesure de la température sans contact au niveau des rotors

(30) Priorität: 02.12.2005 DE 102005057641
(43) Veröffentlichungstag der Anmeldung: 06.06.2007
(73) Patentinhaber: PFEIFFER VACUUM GMBH, 35614 Asslar (DE)
(72) Erfinder: Conrad, Armin, 35745 Herborn (DE)
(74) Vertreter: Knefel, Cordula

(56) Entgegenhaltungen:
- DE-A1- 2 300 167
- DE-A1- 4 133 365
- DE-A1- 4 309 018
- DE-C- 958 600
- FR-A1- 2 216 570
- GB-A- 1 309 906
- GB-A- 1 359 574
- US-A- 1 742 138

## Beschreibung

Die Erfindung betrifft eine Vorrichtung mit Rotor und Stator nach dem Oberbegriff des ersten Anspruches.

Die Messung von Temperaturen an sich bewegenden Objekten ist eine weit verbreitete Aufgabenstellung in der Technik. Wenn es sich bei den Objekten um Rotoren handelt, welche mit sehr hoher Drehzahl umlaufen, kommen nur berührungslose Messmethoden in Frage. Zusätzliche Randbedingungen schränken die Anwendbarkeit bekannter Messmethoden weiter ein. Eine solche Randbedingung kann zum Beispiel der Betrieb unter Vakuum sein. Stellvertretend für viele Anwendungsfälle seien hier schnell rotierende mechanische Vakuumpumpen (zum Beispiel Turbomolekularpumpen) und Zentrifugen genannt. Die Bedeutung der Temperaturmessung und Überwachung wird besonders am Beispiel der Turbomolekularpumpe deutlich, bei der für einen sicheren Betrieb bestimmte Rotortemperaturen nicht überschritten werden dürfen. Dafür ist eine exakte und reproduzierbare Temperaturüberwachung unabdingbar.

In vielen Bereichen der Technik werden zur berührungslosen Temperaturmessung Pyrometer eingesetzt. Diese messen vom Rotor ausgehende Strahlung als Maß für dessen Temperatur. Ein Beispiel für eine solche Anordnung zeigt EP 1 348 940 A2. Die von Sensoren empfangene Strahlung hängt außer von der Temperatur auch sehr stark von der Oberflächenbeschaffenheit des Rotors ab. Da die Oberfläche eines Pumpenrotors beim Abpumpen von dampfförmigen Medien insbesondere in der Prozesstechnik durch Kondensation, Ablagerung von festen Partikeln oder auch durch chemische Reaktionen Wandlungen unterworfen ist, treten Verfälschungen der Temperaturmessung auf. Außerdem erfordert die Abhängigkeit der Anzeige von der Umgebungs- und Gehäusetemperatur eine aufwändige Kompensationselektronik. Die zum Teil hohe Empfindlichkeit gegenüber energiereicher, ionisierter Strahlung beschränkt den Einsatzbereich.

In der DE-OS 43 09 018 wird eine Anordnung zur berührungslosen Temperaturmessung an Rotoren beschrieben, bei der ferromagnetische Materialien eingesetzt werden. Diese ferromagnetischen Materialien werden auf dem Rotor der Anordnung befestigt und bilden mit weiteren Komponenten am Stator einen Magnetkreis. Dessen Eigenschaften ändern sich schlagartig, wenn die Curie-Temperatur des Ferromagneten überschritten wird. Diese Anordnung erlaubt nur, das Überschreiten der Curie-Temperatur festzustellen. Mehrere Temperaturen können nur bestimmt werden, indem mehrere solcher Ferromagnete mit unterschiedlicher Curie-Temperatur zum Einsatz kommen. Die Schwierigkeit beim serienmäßigen Einsatz einer solchen Anordnung liegt in der Beschaffung von ferromagnetischen Materialien mit reproduzierbarer Curie-Temperatur; Messungen über Temperaturbereiche sind nur mit erheblichem Aufwand und damit verbundenen Kosten möglich.

Die GB 1,309,906 schlägt zur Temperaturmessung folgende Anordnung vor: Auf einem magnetischen Kern sind zwei Spulen gewickelt. Eine Spule wird bestromt, in der anderen Spule dadurch eine Spannung induziert. Die magnetische Leitfähigkeit des Kerns hängt von der Temperatur ab, so dass auch die induzierte Spannung von der Temperatur abhängt.

Die US 1,742,138 schlägt vor, in einem äußeren Magnetfeld eine Eisenscheibe und eine Kompositscheibe anzuordnen. Die Scheiben sind länglich und die langen Achsen stehen senkrecht aufeinander. Die Scheiben sind in einem Winkel zu den Magnetfeldlinien angeordnet. Bei einer Temperaturänderung ändert die Kompositscheibe die Permeabilität und verursacht so eine Drehung der Scheiben.

Damit wird ein Zeiger über eine Skala bewegt, auf der die Temperatur abgelesen werden kann.

Der Erfindung liegt die Aufgabe zugrunde, eine Turbomolekularvakuumpumpe mit einer Vorrichtung zur berührungslosen Erfassung von Temperaturen an dem Rotor vorzustellen, welche mit einfachen Mitteln exakte und reproduzierbare Ergebnisse liefert und die oben beschriebenen Nachteile vermeidet.

Die Aufgabe wird durch eine Anordnung mit den Merkmalen des ersten Anspruches gelöst. Die Ansprüche 2 bis 6 stellen vorteilhafte Weiterbildungen der Erfindung dar.

Die erfindungsgemäße Anordnung erlaubt im Gegensatz zum Stand der Technik, die Temperatur des Rotors über einen weiten Bereich hinweg zu messen, wofür zudem nur eine einzige Anordnung notwendig ist. Die Temperaturmessung ist unabhängig von der Curie-Temperatur des Ferromagneten, was die Probleme bei der Produktion der Anordnung verringert, da die Anforderung einer konstanten und genauen Curie-Temperatur über hohe Stückzahlen von Ferromagneten entfällt. Die Temperaturmessung ist außerdem unabhängig von der Oberflächenbeschaffenheit des Rotors und des Stators, so dass Ablagerungen praktisch keine Rolle spielen.

Gemäß der Erfindung kann das temperaturproportionale Signal eine Spannung sein, so dass die Weiterverarbeitung des Signales in einer Elektronik vereinfacht ist.

Gemäß der Erfindung ist die Turbomolekularpumpe so gestaltet, dass die Betriebstemperatur des Magneten in dem Temperaturbereich liegt, in dem die Abhängigkeit der Magnetisierung von der Temperatur linear und reversibel ist. Hierdurch wird erreicht, dass die Messung praktisch beliebig oft wiederholbar ist. Selbst nach Erreichen eines Temperaturgrenzwertes ist eine weitere Temperaturbestimmung möglich. Die Genauigkeit wird erhöht und die Umwandlung der Signalspannung in ein temperaturproportionales Signal vereinfacht.

Gemäß der Erfindung ist vorgesehen, zur Temperaturmessung weitgehend auf bereits im System befindliche Komponenten zurückzugreifen, indem der Magnet zur Temperaturmessung ein Antriebsmagnet ist. Dadurch, dass Motormagnet und Motorspulen verwendet werden, wird der Bauteilaufwand in vorteilhafter Weise erheblich reduziert.

In einer Weiterbildung weist die Anordnung einen festen Spalt zwischen zwei Spulen auf, zwischen dem sich der Ferromagnet auf seiner Kreisbahn beim Umlauf um die Rotorachse hindurch bewegt. Diese Maßnahme erhöht die Genauigkeit der Messung, da auf diese Weise vermieden wird, dass sich der Spalt zwischen Magnet und Messspule ändert. Diese Änderung wird im Allgemeinen durch die Materialausdehnung des Rotors mit steigender Temperatur bewirkt.

In einer weiteren Ausführungsform sind mehrere Spulenpaare entlang der Kreisbahn angeordnet, wodurch die Messgenauigkeit weiter erhöht werden kann. Diese Spulenpaare sind in Serien- oder Parallelschaltung gekoppelt.

Die Vorteile der erfindungsgemäßen Anordnung sind besonders ausgeprägt beim Einsatz in der erfindungsgemäßen Turbomolekularpumpe mit schnelldrehendem Rotor, da die Anordnung wenige Komponenten auf dem Rotor besitzt. Dies erlaubt es, sie an verschiedenen Stellen des Rotors zu platzieren, ermöglicht daher eine größere Freiheit bei der Wahl des Messortes. Ebenfalls vorteilhaft ist die Ausführungsform mit konstantem Spalt, da dieser den Einfluss der wärmebedingten Längenänderungen eliminiert. Diese treten gerade bei Turbomolekularpumpen auf, da der Rotor weitgehend im atmosphärefreien Raum arbeitet und daher seine Wärme schlecht abgeben kann. Weiterhin ist die Unempfindlichkeit gegen Ablagerung von Partikeln auf der Oberfläche der Anordnung bei einer Turbomolekularpumpe besonders vorteilhaft, da diese Pumpen oft in der Prozesstechnik eingesetzt werden.

Im Folgenden soll die Erfindung anhand von Figuren beispielhaft erläutert werden.
- Fig. 1:: Diagramm, welches die Temperaturabhängigkeit der Magnetisierung eines Magneten zeigt;
- Fig. 2:: zeigt eine erste Messanordnung im Achsschnitt;
- Fig. 3:: eine vorteilhafte Ausführungsform, die die Antriebsanordnung für eine Welle, beispielsweise in einer Turbomolekularpumpe, nutzt;
- Fig. 4:: Prinzip der elektrischen Schaltung für die Anordnung nach Fig. 3.

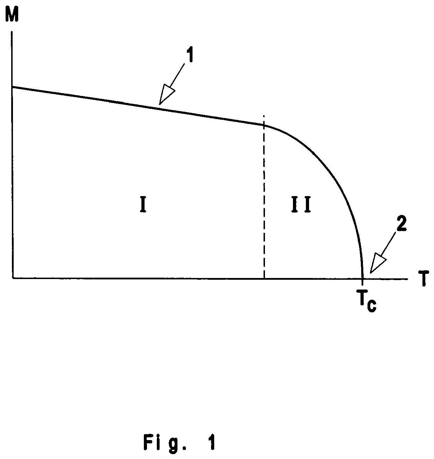

Figur 1 veranschaulicht in einem Diagramm die Abhängigkeit der magnetischen Polarisation M (Magnetisierung) eines Permanentmagneten von der Temperatur T, im vorliegenden Fall die Rotortemperatur. Diese Temperaturabhängigkeit folgt der Kurve 1. Mit zunehmender Temperatur nimmt die magnetische Polarisation ab. Im Bereich I ist diese Abnahme in sehr guter Näherung linear und außerdem reversibel. Im Bereich II fällt sie immer stärker ab, bis schließlich keine Polarisation mehr vorhanden ist. Dieser Punkt 2 tritt bei der materialspezifischen Curie-Temperatur T_{C} ein. Vorteilhaft werden die Magnete der erfindungsgemäßen Anordnung im Bereich I eingesetzt.

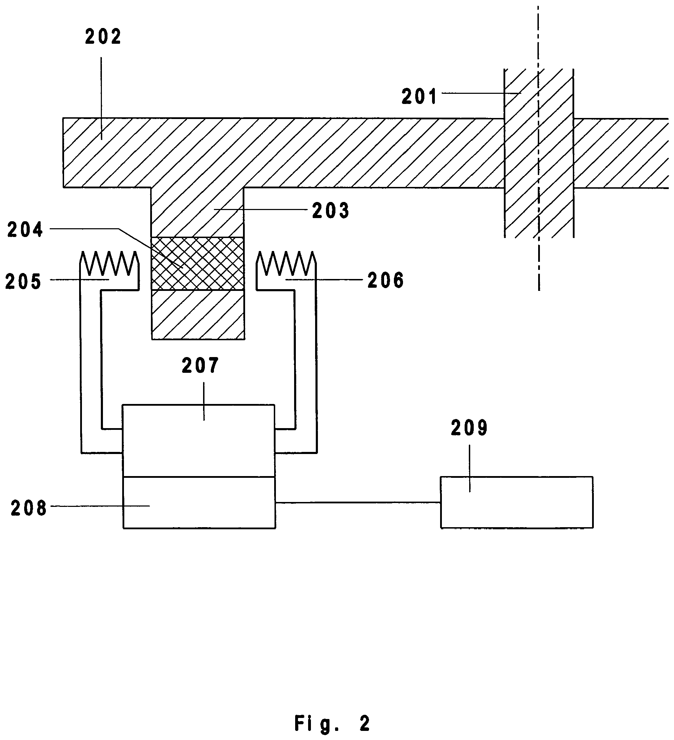

Eine erste geeignete erfindungsgemäße Anordnung zum Messen der Temperatur ist in Figur 2 dargestellt. Der Rotor weist eine Welle 201 und ein scheibenförmiges Teil 202 auf. Auf diesem scheibenförmigen Teil sitzt ein Ring 203, in dem an einer Stelle des Umfanges ein Ferromagnet 204 angeordnet ist. Alternativ kann statt einem Ring auch eine Erhebung vorgesehen sein, an der der Ferromagnet angebracht ist. Durch die Rotation des Rotors läuft dieser auf einer Bahn um die Rotorachse. Auf dieser Umlaufbahn kommt er an der Spule 205 vorbei, in der dann im Moment des Vorbeifluges eine Spannung induziert wird. Diese Spannung wird von der Spannungsmesselektronik 207 gemessen und von einem Teil 208 der Elektronik in ein temperaturproportionales Signal umgewandelt. Dieses Signal steht dann beispielsweise einem Mikrocontroller 209 zur Weiterverarbeitung zur Verfugung. Diese erste Messanordnung kann dadurch verbessert werden, dass eine zweite Spule 206 im festen Abstand zur ersten Spule 205 derart angeordnet ist, dass der Magnet 204 auf der Kreisbahn den Zwischenraum zwischen den Spulen passiert. Hierdurch wird eine deutlich verbesserte Genauigkeit wie folgt erreicht: Bei einer Erwärmung dehnen sich der Rotor und insbesondere die Scheibe 202 aus. Hierdurch nimmt der Abstand des Ferromagneten 204 zur Rotationsachse zu, er fliegt dadurch näher an der Spule 205 vorbei, der Luftspalt nimmt ab. Wird nun eine zweite Spule 206 wie gezeigt angeordnet, nimmt zwar der Abstand zur Spule 205 ab, der Abstand zur Spule 206 hingegen zu, so dass der Luftspalt in der Summe
konstant ist. Somit ist das induzierte Signal unabhängig von der Störgröße Rotorverschiebung.

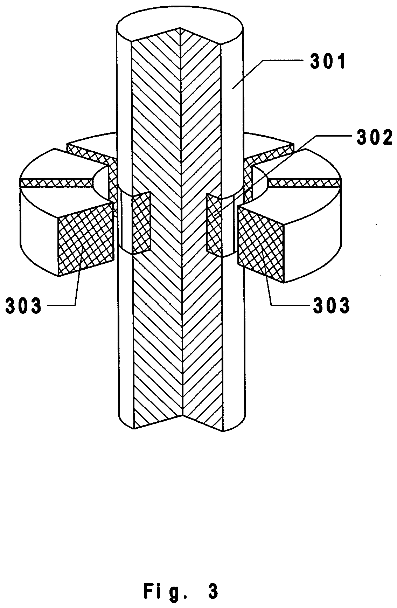

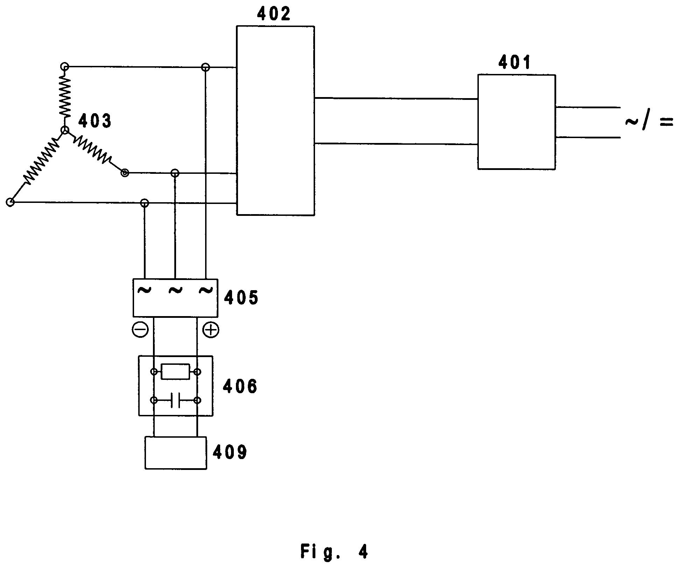

Eine zweite geeignete Messanordnung ist in den Figuren 3 und 4 gezeigt. In Figur 3 ist die Welle 301 eines Rotors dargestellt. Auf ihr befestigt sind Permanentmagnete 302. Spulen 303 erzeugen ein Magnetfeld, welches durch geeignete Bestromung der Spulen die Welle in Drehung versetzt. Eine Einrichtung, die dies leistet, ist in Figur 4 dargestellt. Mit 403 sind drei Spulen des Antriebes gekennzeichnet. Diese Spulen werden durch eine Antriebselektronik 402 in an sich bekannter Weise bestromt, wobei zu jedem Zeitpunkt eine der Spulen unbestromt ist. Die unbestromte Spule kann daher als Detektorspule für die Spannungsmesseinrichtung 405 dienen. Diese Spannung wird anschließend von einer Gleichrichterschaltung 406 gleichgerichtet, so dass einem Mikrocontroller 409 eine Gleichspannung als Temperatursignal zur Weiterverarbeitung zur Verfügung steht. Eine Netzelektronik 401 dient zur Versorgung der Antriebselektronik 402 mit elektrischer Energie.

## Patentansprüche

1. Vorrichtung mit Rotor (201, 202) und Stator, mit einem Magneten (204, 302) auf dem Rotor und einer elektrischen Spule (205, 206), welche am Stator angeordnet ist, mit elektronischen Mitteln zur Messung einer an diesen Spulen anliegenden Signalspannung (207, 405), mit einem Antrieb, der den Rotor in Drehung versetzt, wobei als Signalspannung die von dem Magneten (204) in dieser Spule induzierte Spannung gemessen wird und die elektronischen Mittel so ausgebildet sind, dass sie die Spannung in ein temperaturproportionales Signal umwandeln, **dadurch gekennzeichnet, dass** der Magnet ein Antriebsmagnet (302, 403) ist.

2. Vorrichtung nach Anspruch 1, **dadurch gekennzeichnet, dass** das temperaturproportionale Signal eine Spannung ist.

3. Vorrichtung nach Anspruch 1 oder 2, **dadurch gekennzeichnet, dass** die Betriebstemperatur des Magneten (204) in dem Temperaturbereich liegt, in dem die Abhängigkeit der Magnetisierung von der Temperatur linear und reversibel ist.

4. Vorrichtung nach einem der Ansprüche 1 bis 3, **dadurch gekennzeichnet, dass** sie zwei Spulen (205, 206) am Stator und einen Magneten (204) am Rotor aufweist, die so angeordnet sind, dass der Magnet auf seiner durch die Drehung des Rotors entstehende Kreisbahn den Zwischenraum zwischen den Spulen passiert.

5. Vorrichtung nach Anspruch 4, **dadurch gekennzeichnet, dass** mehrere Spulenpaare entlang der Kreisbahn angeordnet sind.

6. Turbomolekularvakuumpumpe, **dadurch gekennzeichnet, dass** sie eine Vorrichtung nach einem der Ansprüche 1 bis 5 aufweist.

## Claims

1. A device with a rotor (201, 202) and a stator, with a magnet (204, 302) on the rotor and an electrical coil (205, 206), which is arranged on the stator, with electronic means for the measurement of a signal voltage (207, 405) at these coils, with a drive, which sets the rotor into rotation, wherein the voltage induced in this coil by the magnet (204) is measured as the signal voltage and the electronic means are configured so that they convert the voltage into a temperature-proportional signal, **characterised in that** the magnet is a drive magnet (302, 403).

2. A device according to claim 1, **characterised in that** the temperature-proportional signal is a voltage.

3. A device according to claim 1 or 2, **characterised in that** the operating temperature of the magnet (204) lies in the temperature range in which the dependence of the magnetisation of the temperature is linear and reversible.

4. A device according to any one of claims 1 to 3, **characterised in that** it comprises two coils (205, 206) on the stator and one magnet (204) on the rotor, which are arranged so that the magnet, on its circular path caused by the rotation of the motor, passes the intermediate space between the coils.

5. A device according to claim 4, **characterised in that** a plurality of coil pairs are arranged along the circular path.

6. A turbomolecular pump **characterised in that** it comprises a device according to any one of claims 1 to 5.

## Revendications

1. Dispositif comprenant un rotor (201, 202) et un stator, comportant un aimant (204, 302) sur le rotor et une bobine électrique (205, 206) qui est disposée sur le stator, comprenant des moyens électroniques destinés à mesurer une tension de signal (207, 405) appliquée à ces bobines, comprenant un mécanisme d'entraînement qui met le rotor en rotation, la tension induite par l'aimant (204) dans cette bobine étant mesurée en tant que tension de signal et les moyens électroniques étant configurés de telle sorte qu'ils convertissent la tension en un signal proportionnel à la température, **caractérisé en ce que** l'aimant est un aimant d'entraînement (302, 403).

2. Dispositif selon la revendication 1, **caractérisé en ce que** le signal proportionnel à la température est une tension.

3. Dispositif selon la revendication 1 ou 2, **caractérisé en ce que** la température de fonctionnement de l'aimant (204) se trouve dans la plage de températures dans laquelle la dépendance à la température de la magnétisation est linéaire et réversible.

4. Dispositif selon l'une des revendications 1 à 3, **caractérisé en ce qu'**il possède deux bobines (205, 206) sur le stator et un aimant (204) sur le rotor, lesquels sont disposés de telle sorte que l'aimant passe dans l'espace intermédiaire entre les bobines sur sa trajectoire circulaire produite par la rotation du rotor.

5. Dispositif selon la revendication 4, **caractérisé en ce que** plusieurs paires de bobines sont disposées le long de la trajectoire circulaire.

6. Pompe à vide turbomoléculaire, **caractérisée en ce qu'**elle possède un dispositif selon l'une des revendications 1 à 5.
